(19) Europäisches Patentamt
European Patent Office
Office européen des brevets

(11) EP 4 692 137 A1

(12) **EUROPEAN PATENT APPLICATION**
published in accordance with Art. 153(4) EPC

(43) Date of publication:
**11.02.2026 Bulletin 2026/07**

(21) Application number: **24784791.6**

(22) Date of filing: **26.03.2024**

(51) International Patent Classification (IPC):
***C08F 16/06*** *(2006.01)* ***C08F 8/12*** *(2006.01)*
***C08F 16/38*** *(2006.01)* ***C08J 5/18*** *(2006.01)*

(52) Cooperative Patent Classification (CPC):
**C08F 8/12; C08F 16/06; C08F 16/38; C08J 5/18**

(86) International application number:
**PCT/JP2024/011966**

(87) International publication number:
**WO 2024/210002 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.04.2023 JP 2023062058**

(71) Applicant: **Sekisui Chemical Co., Ltd.**
**Osaka-shi, Osaka 530-8565 (JP)**

(72) Inventor: **OOTSUKI, Kenichi**
**Mishima-gun, Osaka 618-0021 (JP)**

(74) Representative: **Cabinet Beau de Loménie**
**103, rue de Grenelle / CS 90800**
**75340 Paris Cedex 07 (FR)**

# (54) POLYVINYL ALCOHOL RESIN, FILM ROLL, AND POLYVINYL ACETAL RESIN

(57) The present invention provides a polyvinyl alcohol resin that can provide a film having high capacitance retention at high temperature and having excellent strength and flexibility. Provided is a polyvinyl alcohol resin satisfying the following formulas (1) and (2):

$$A \geq 3.0 \quad (1)$$

$$1.0 \geq B/A \geq 0.6 \quad (2)$$

where A is a permittivity at 25°C measured at 1 kHz, and B is a permittivity at 125°C measured at 1 kHz.



Processed by Luminess, 75001 PARIS (FR)

## Description

### TECHNICAL FIELD

The present invention relates to polyvinyl alcohol resins.

### BACKGROUND ART

Polyvinyl alcohol resins are obtained by saponifying polymerized vinyl ester monomers. Polyvinyl alcohol resins have been used in various applications, including suspending agents for polymerization of polyvinyl chloride resins, dielectric sheets for film capacitors, polarizing films, water-soluble films, and adhesives.

Meanwhile, in addition to polyvinyl alcohol resins, biaxially oriented polypropylene (OPP) has been mainly studied as a resin to be used for dielectric sheets for film capacitors. OPP films, however, have low permittivity, which leads to a larger capacitor size to secure the capacitance. OPP films also have low heat-resistant temperature and may undergo a change in permittivity at high temperature. This may lead to insufficient performance in automobile applications (e.g., electric vehicles), which require particularly high-temperature resistance. Moreover, thickness reduction of OPP films is limited because they are obtained by stretching.

In view of the situation in the art, studies have been made on producing a film for film capacitors using a polyvinyl alcohol resin soluble in an aqueous solvent. Regarding the polyvinyl alcohol resin, for example, Patent Literature 1 discloses an amide-modified polyvinyl alcohol resin. Patent Literature 2 discloses a modified polyvinyl alcohol resin containing an acrylamide monomer unit.

### CITATION LIST

#### - Patent Literature

Patent Literature 1: JP 2019-065059 A
Patent Literature 2: WO 2015/098978

### SUMMARY OF INVENTION

#### - Technical Problem

Conventional polyvinyl alcohol resins may provide a film capacitor insufficient in its capacitance or its capacitance retention in high-temperature environments. Thus, there is a need for a material for dielectric resin sheets that can be formed into a film with an aqueous solvent and provide a high-performance electronic component.

The present invention aims to provide a polyvinyl alcohol resin that can provide a film having high capacitance retention at high temperature and having excellent strength and flexibility.

#### - Solution to Problem

The disclosure (1) relates to a polyvinyl alcohol resin satisfying the following formulas (1) and (2):

$$A \geq 3.0 \quad (1)$$

$$1.0 \geq B/A \geq 0.6 \quad (2)$$

where A is a permittivity at 25°C measured at 1 kHz, and B is a permittivity at 125°C measured at 1 kHz.

The disclosure (2) relates to the polyvinyl alcohol resin according to the disclosure (1), wherein the polyvinyl alcohol resin has a solubility parameter of 12 or greater.

The disclosure (3) relates to the polyvinyl alcohol resin according to the disclosure (1) or (2), wherein the polyvinyl alcohol resin has, in a side chain, at least one functional group selected from the group consisting of a carboxylic acid group, a sulfonic acid group, a pyrrolidone ring group, an amide group, and an amino group.

The disclosure (4) relates to a film roll including the polyvinyl alcohol resin according to any one of the disclosures (1) to (3).

The disclosure (5) relates to a polyvinyl acetal resin that is an acetalized product of the polyvinyl alcohol resin according to any one of the disclosures (1) to (3).

The present invention is described in detail below.

After extensive studies, the present inventor arrived at a polyvinyl alcohol resin satisfying a predetermined relation between the permittivity at 25°C and permittivity at 125°C measured at 1 kHz. The inventor found out that such a polyvinyl alcohol resin enables the production of a film that undergoes little change in performance even at high temperature. The present invention is thus completed.

The polyvinyl alcohol resin satisfies the following formulas (1) and (2):

$$A \geq 3.0 \quad (1)$$

$$1.0 \geq B/A \geq 0.6 \quad (2)$$

where A is a permittivity at 25°C measured at 1 kHz, and B is a permittivity at 125°C measured at 1 kHz.

The use of a polyvinyl alcohol resin enables the production of a film with an aqueous solvent. The use of a polyvinyl alcohol resin satisfying the above relation enables the production of a film that undergoes little change in performance even at high temperature. This enables the production of a film capacitor with particularly high performance.

A is preferably 3.5 or greater, more preferably 4.0 or greater. The upper limit is not limited but is preferably 5.0 or less.

B is preferably 3.0 or greater, more preferably 3.3 or greater, still more preferably 3.5 or greater. The upper limit is not limited but is preferably 4.5 or less.

B/A is preferably 0.7 or greater, more preferably 0.8 or greater.

The permittivity can be determined by analyzing a film of the polyvinyl alcohol resin having a thickness of 0.05 mm using an LCR meter.

A and A/B can be adjusted by changing the structure (e.g., the proportions of structural units, block properties) of the polyvinyl alcohol resin, conditions for the production of the polyvinyl alcohol resin, and/or the like. Specifically, A and A/B can be adjusted particularly by using continuous stirred-tank reactors in series in a polyvinyl ester production step, and changing, for example, the temperature, mean residence time, or stirring conditions in each reaction tank.

The polyvinyl alcohol resin preferably has a solubility parameter of 12 or greater.

When the solubility parameter is 12 or greater, the solubility in water can be enhanced.

The solubility parameter is more preferably 12.3 or greater, still more preferably 12.6 or greater while preferably 15 or less, more preferably 14 or less, still more preferably 13.5 or less.

The solubility parameter is measured using the Fedors method.

The solubility parameter can be adjusted by changing the type of the modified group or the modified group content.

The polyvinyl alcohol resin preferably has a residual acetyl group content of 0.01 mol% or more, more preferably 0.1 mol% or more, still more preferably 0.5 mol% or more, further preferably 1.0 mol% or more, while preferably 30.0 mol% or less, more preferably 20.0 mol% or less, still more preferably 10.0 mol% or less, further preferably 5.0 mol% or less. In other words, the residual acetyl group content is preferably 0.01 to 30.0 mol%, more preferably 0.1 to 20.0 mol%, still more preferably 0.5 to 10.0 mol%, further preferably 1.0 to 5.0 mol%.

The residual acetyl group content means the proportion of an acetyl group-containing structural unit represented by the following formula (3) in all the structural units constituting the polyvinyl alcohol resin.

The residual acetyl group content can be measured by $^{1}$H-NMR, for example. The measurement device may be AVANCE 400 (available from Bruker Biospin), for example.

[Chem. 1]

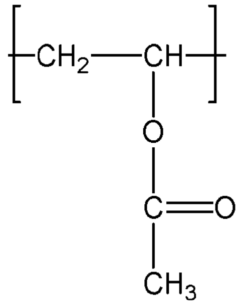

(3)

The polyvinyl alcohol resin preferably has a hydroxy group content of 70.0 mol% or more, more preferably 85.0 mol% or more, still more preferably 90.0 mol% or more, while preferably 99.5 mol% or less, more preferably 99.0 mol% or less, still more preferably 98.5 mol% or less. In other words, the hydroxy group content is preferably 70.0 to 99.5 mol%, more preferably 85.0 to 99.0 mol%, still more preferably 90.0 to 98.5 mol%.

The hydroxy group content means the proportion of a hydroxy group-containing structural unit represented by the following formula (4) in all the structural units constituting the polyvinyl alcohol resin.

The hydroxy group content can be measured using the same method as for the residual acetyl group content.

[Chem. 2]

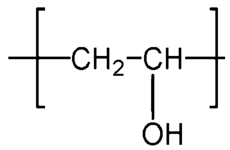

(4)

The polyvinyl alcohol resin preferably has a degree of saponification of 80.0 mol% or greater, more preferably 85.0 mol% or greater, still more preferably 87.0 mol% or greater, particularly preferably 90.0 mol% or greater. The polyvinyl alcohol resin preferably has a degree of saponification of 99.9 mol% or less, more preferably 99.0 mol% or less, still more preferably 98.0 mol% or less, particularly preferably 97.0 mol% or less. In other words, the degree of saponification is preferably 80.0 to 99.9 mol%, more preferably 85.0 to 99.0 mol%, still more preferably 87.0 to 98.0 mol%, particularly preferably 90.0 to 97.0 mol%.

The degree of saponification means the proportion of the hydroxy group content in the sum of the residual acetyl group content and the hydroxy group content in the polyvinyl alcohol resin.

The degree of saponification can be measured using a method in conformity with JIS K6726-1994.

The polyvinyl alcohol resin preferably has, in a side chain, at least one functional group selected from the group consisting of a carboxylic acid group, a sulfonic acid group, a pyrrolidone ring group, an amide group, and an amino group. The carboxylic acid group and the sulfonic acid group may be in the form of a derivative such as a salt thereof.

The polyvinyl alcohol resin with the above structure undergoes less change in permittivity at high temperature.

Examples of structural units containing the functional group include carboxylic acid group-containing structural units represented by the following formulas (5-1) to (5-4), a sulfonic acid group-containing structural unit represented by the following formula (6), a pyrrolidone ring group-containing structural unit represented by the following formula (7), an amide group-containing structural unit represented by the following formula (8), and an amino group-containing structural unit represented by the following formula (9).

Preferred among these are a carboxylic acid group-containing structural unit represented by the following formula (5-1), a sulfonic acid group salt-containing structural unit represented by the following formula (6), a pyrrolidone ring group-containing structural unit represented by the following formula (7), and an amino group-containing structural unit represented by the following formula (9), as they can reduce the change in permittivity. More preferred is a sulfonic acid group-containing structural unit represented by the following formula (6). Still more preferred is a sulfonic acid group salt-containing structural unit represented by the following formula (6-1).

[Chem. 3]

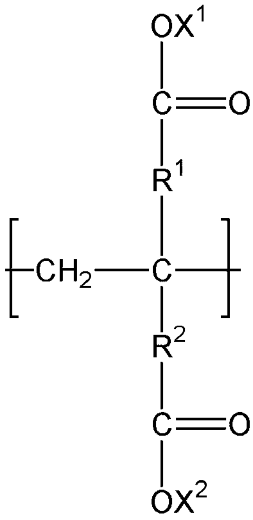
(5 − 1)

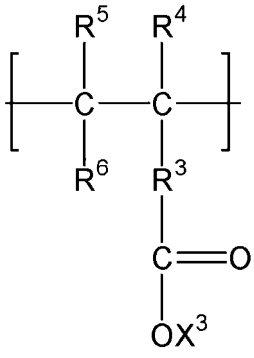
(5 − 2)

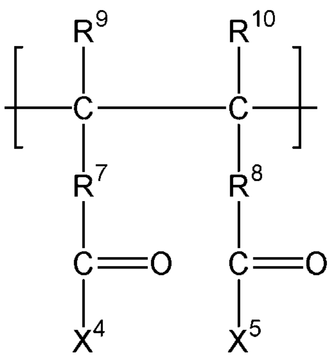
(5 − 3)

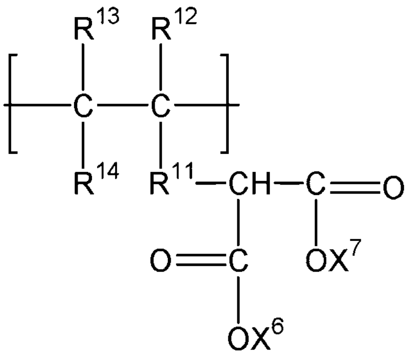
(5 − 4)

In the formula (5-1), $R^1$ and $R^2$ each independently represent a C0-C10 alkylene group; and $X^1$ and $X^2$ each independently represent a hydrogen atom, a metal atom, or a C1-C3 alkyl group.

In the formula (5-1), the alkylene groups represented by $R^1$ and $R^2$ each have a carbon number of preferably 0 or greater while preferably 5 or less, more preferably 3 or less.

Examples of the C0-C10 alkylene group include a single bond, linear alkylene groups such as methylene, ethylene, trimethylene, tetramethylene, pentamethylene, hexamethylene, octamethylene, and decamethylene groups, branched alkylene groups such as methylmethylene, methylethylene, 1-methylpentylene, and 1,4-dimethylbutylene groups, and cyclic alkylene groups such as cyclopropylene, cyclobutylene, and cyclohexylene groups. Preferred among these are a single bond, linear alkylene groups such as methylene, ethylene, n-propylene, and n-butylene groups. More preferred are a single bond, a methylene group, and an ethylene group.

$R^1$ and $R^2$ may be the same as or different from each other, but are preferably different from each other. Preferably, at least one of them is a single bond. More preferably, one of them is a single bond and the other is a methyl group.

When at least one of $X^1$ or $X^2$ in the formula (5-1) is a metal atom, examples of the metal atom include a sodium atom, a lithium atom, and a potassium atom. Preferred among these is a sodium atom.

In the formula (5-1), examples of the C1-C3 alkyl groups represented by $X^1$ and $X^2$ include a methyl group, an ethyl group, and a propyl group. Preferred among these is a methyl group.

$X^1$ and $X^2$ may be the same as or different from each other, but are preferably the same as each other. $X^1$ and $X^2$ are each preferably a hydrogen atom or a methyl group, more preferably a hydrogen atom.

In the formula (5-2), $R^3$ represents a C0-C12 alkylene group; $X^3$ represents a hydrogen atom, a metal atom, or a C1-C3 alkyl group; and $R^4$, $R^5$, and $R^6$ each independently represent a hydrogen atom or a C1-C10 alkyl group.

In the formula (5-2), examples of the alkylene group represented by $R^3$ include those mentioned as examples for $R^1$ and $R^2$ in the formula (5-1). Preferred among these are a single bond and linear alkylene groups such as methylene, ethylene, trimethylene, and tetramethylene groups. More preferred are a single bond, a methylene group, and an ethylene group. Still more preferred is a single bond.

In the formula (5-2), when $X^3$ is a metal atom, examples of the metal atom include those mentioned as examples

for $X^1$ and $X^2$ in the formula (5-1). Preferred among these is a sodium atom.

In the formula (5-2), when $X^3$ is a C1-C3 alkyl group, examples of the alkyl group include those mentioned as examples for the $X^1$ and $X^2$ in the formula (5-1). Preferred among these is a methyl group.

In the formula (5-2), $R^4$, $R^5$, and $R^6$ may be the same as or different from each other, but are more preferably the same as each other. $R^4$, $R^5$, and $R^6$ are preferably hydrogen atoms.

Examples of the C1-C10 alkyl group include linear alkyl groups such as methyl, ethyl, propyl, n-butyl, n-pentyl, n-heptyl, n-octyl, n-nonyl, and n-decyl groups, branched alkyl groups such as isopropyl, isobutyl, sec-butyl, tert-butyl, isopentyl, 2,2-dimethylpropyl, 1,1,3,3-tetramethylbutyl, and 2-ethylhexyl groups, and cycloalkyl groups such as cyclopropyl, cyclopropylmethyl, cyclobutyl, cyclopentyl, and cyclohexyl groups. Preferred among these are linear alkyl groups such as methyl, ethyl, propyl, and n-butyl groups. More preferred among these are methyl and ethyl groups.

In the formula (5-3), $R^7$ and $R^8$ each independently represent a C0-C10 alkylene group; $X^4$ and $X^5$ each independently represent a hydrogen atom, a metal atom, or a C1-C3 alkyl group; and $R^9$ and $R^{10}$ each independently represent a hydrogen atom or a C1-C5 alkyl group.

In the formula (5-3), examples of the alkylene groups represented by $R^7$ and $R^8$ include those mentioned as examples for $R^1$ and $R^2$ in the formula (5-1). Preferred among these are a single bond and linear alkylene groups such as methylene, ethylene, trimethylene, and tetramethylene groups. More preferred are a single bond, a methylene group, and an ethylene group. Still more preferred is a single bond.

When at least one of $X^4$ or $X^5$ in the formula (5-3) is a metal atom, examples of the metal atom include those mentioned as examples for $X^1$ and $X^2$ in the formula (5-1). Preferred among these is a sodium atom.

When at least one of $X^4$ or $X^5$ in the formula (5-3) is a C1-C3 alkyl group, examples of the alkyl group include those mentioned as examples for $X^1$ and $X^2$ in the formula (5-1). Preferred among these is a methyl group.

In the formula (5-3), examples of the alkyl groups represented by $R^9$ and $R^{10}$ include those mentioned as examples for $R^4$, $R^5$, and $R^6$ in the formula (5-2).

In the formula (5-4), $R^{11}$ represents a C1-C12 alkylene group; $X^6$ and $X^7$ each represent a hydrogen atom, a metal atom, or a C1-C3 alkyl group; and $R^{12}$, $R^{13}$, and $R^{14}$ each independently represent a hydrogen atom or a C1-C10 alkyl group.

In the formula (5-4), examples of the alkylene group represented by $R^{11}$ include those mentioned as examples for $R^1$ and $R^2$ in the formula (5-1). Preferred among these are a single bond and linear alkylene groups such as methylene, ethylene, trimethylene, and tetramethylene groups. More preferred are a single bond, a methylene group, and an ethylene group. Still more preferred is a single bond.

When $X^6$ or $X^7$ in the formula (5-4) is a metal atom, examples of the metal atom include those mentioned as examples for $X^1$ and $X^2$ in the formula (5-1). Preferred among these is a sodium atom.

When $X^6$ or $X^7$ in the formula (5-4) is a C1-C3 alkyl group, examples of the alkyl group include those mentioned as examples for $X^1$ and $X^2$ in the formula (5-1). Preferred among these is a methyl group.

In the formula (5-4), examples of the alkyl groups represented by $R^{12}$, $R^{13}$, and $R^{14}$ include those mentioned as examples for $R^4$ and $R^5$ in the formula (5-2).

[Chem. 4]

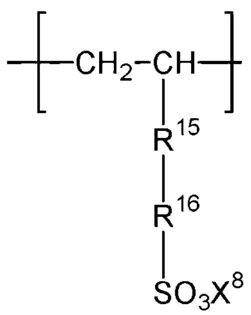

(6)

In the formula (6), $R^{15}$ and $R^{16}$ each independently represent a C0-C4 alkylene group, an amide group (-CONH-), an ester group (-COO-), or an ether group (-O-); and $X^8$ represents a hydrogen atom, a metal atom, or a C1-C3 alkyl group.

Examples of the C0-C4 alkylene group include a single bond, linear alkylene groups such as methylene, ethylene, trimethylene, and tetramethylene groups, and branched alkylene groups such as propylene (1-methylethylene, 2-methylethylene), butylene (1-ethylethylene, 2-ethylethylene), 1,2-dimethylethylene, 2,2-dimethylethylene, 1-methyltrimethylene, 2-methyltrimethylene, and 3-methyltrimethylene groups. Preferred among these is a 2,2-dimethylethylene group.

In the formula (6), examples of the atom or group represented by $X^8$ include those mentioned as examples for $X^1$

and $X^2$ in the formula (5-1). Preferred among these is a sodium atom.

A preferable sulfonic acid group-containing structural unit is a sulfonic acid group salt-containing structural unit represented by the following formula (6-1).

[Chem. 5]

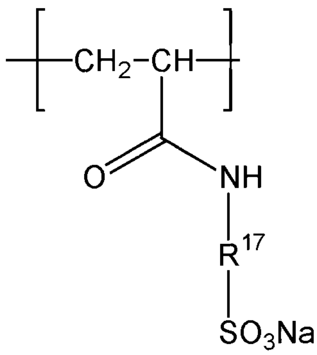

(6-1)

In the formula (6-1), $R^{17}$ represents a C1-C4 alkylene group.

Examples of the C1-C4 alkylene group include those mentioned as examples for $R^{15}$ and $R^{16}$ in the formula (6). Preferred among these is a 2,2-dimethylethylene group.

[Chem. 6]

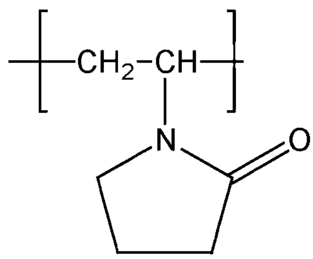

(7)

[Chem. 7]

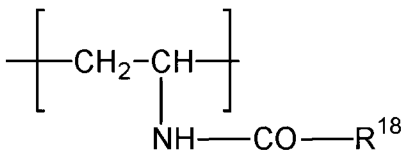

(8)

In the formula (8), $R^{18}$ represents a hydrogen atom or a C1-C10 alkyl group.

In the formula (8), examples of the alkyl group represented by $R^{18}$ include those mentioned as examples for $R^4$, $R^5$, and $R^6$ in the formula (5-2).

[Chem. 8]

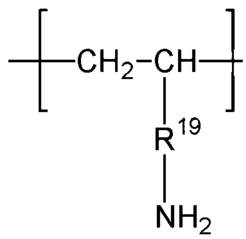

(9)

In the formula (9), $R^{19}$ represents a C0-C10 alkylene group.

In the formula (9), examples of the alkylene group represented by $R^{19}$ include those mentioned as examples for

$R^1$ and $R^2$ in the formula (5-1). Preferred among these is a single bond.

The amount of the structural units containing the functional group (hereinafter also referred to as a modified group content) in the polyvinyl alcohol resin is preferably 0.01 mol% or more, more preferably 0.05 mol% or more, still more preferably 1.0 mol% or more, further preferably 2.0 mol% or more, while preferably 11.0 mol% or less, more preferably 10.0 mol% or less, still more preferably 8.0 mol% or less, further preferably 5.0 mol% or less. The modified group content is preferably 0.01 to 11.0 mol%, more preferably 0.05 to 10.0 mol%, still more preferably 1.0 to 8.0 mol%, further preferably 2.0 to 5.0 mol%.

The modified group content can be measured by the same method as for the residual acetyl group content.

The polyvinyl alcohol resin preferably has a viscosity average degree of polymerization of 300 or greater, more preferably 500 or greater, still more preferably 600 or greater, further preferably 700 or greater, for example 800 or greater, while preferably 3,500 or less, more preferably 3,000 or less, still more preferably 2,500 or less, further preferably 2,000 or less, for example 1,800 or less. In other words, the viscosity average degree of polymerization is preferably 300 to 3,500, more preferably 500 to 3,000, still more preferably 600 to 2,500, further preferably 700 to 2,000, particularly preferably 800 to 1,800.

The viscosity average degree of polymerization can be determined by measuring the viscosity of a 4% by weight aqueous solution of the polyvinyl alcohol resin by a method in conformity with JIS K6726-1994.

The polyvinyl alcohol resin may be produced, for example, by copolymerizing a vinyl ester and a different unsaturated monomer to give a vinyl ester copolymer, and adding a saponification catalyst to saponify, in other words, hydrolyze, the vinyl ester copolymer.

In particular, the polyvinyl alcohol resin with the above predetermined properties can be produced by using continuous stirred-tank reactors in series, and changing the temperature, mean residence time, and/or stirring conditions in each reaction tank in polymerizing the vinyl ester copolymer. Also, in particular, the polyvinyl alcohol resin with the above predetermined properties can be produced, for example, by adjusting one or more of the following ratios to specific ranges in each of the reaction tanks: the ratio of the volume of a vortex, generated at the gas-liquid interface in stirring, to the weight of the reaction solution; the ratio of the distance between the liquid surface and the impeller to the height of the liquid surface; and the ratio of the impeller diameter to the reaction tank diameter.

Any vinyl ester may be used. Examples include vinyl formate, vinyl acetate, vinyl propionate, and vinyl pivalate. Preferred among these is vinyl acetate.

Examples of the different unsaturated monomer include monomers other than vinyl esters and having a carbon-carbon double bond such as a vinyl group. Examples include: unsaturated acids such as monocarboxylic acids having a radically polymerizable unsaturated double bond and dicarboxylic acids having a radically polymerizable unsaturated double bond, and their derivatives such as their salts and their esters; olefins; (meth)acrylamides; N-vinylamides; vinyl ethers; nitriles; vinyl halides; allyl compounds; vinyl silyl compounds; sulfonic acid group-containing compounds; and amino group-containing compounds. Preferred among these are unsaturated acids, their salts, and their esters.

Examples of the monocarboxylic acids having a radically polymerizable unsaturated double bond include acrylic acid, crotonic acid, methacrylic acid, and oleic acid.

Examples of the dicarboxylic acids having a radically polymerizable unsaturated double bond include methylenemalonic acid, itaconic acid, 2-methyleneglutaric acid, 2-methyleneadipic acid, and 2-methylenesebacic acid.

Examples of the olefins include ethylene, propylene, 1-butene, and isobutene.

Examples of the (meth)acrylamides include acrylamide, n-methylacrylamide, N-ethylacrylamide, and N,N-dimethylacrylamide.

Examples of the N-vinylamides include N-vinylformamide and N-vinylpyrrolidone.

Examples of the vinyl ethers include methyl vinyl ether, ethyl vinyl ether, n-propyl vinyl ether, i-propyl vinyl ether, and n-butyl vinyl ether.

Examples of the nitriles include (meth)acrylonitrile.

Examples of the vinyl halides include vinyl chloride and vinylidene chloride.

Examples of the allyl compounds include allyl acetate and allyl chloride.

Examples of the vinyl silyl compounds include vinyltrimethoxysilane.

Examples of the sulfonic acid group-containing compounds include: (meth)acrylamido alkane sulfonic acids such as (meth)acrylamidopropanesulfonic acid and 2-acrylamido-2-methylpropanesulfonic acid and their salts; and olefin sulfonic acids such as ethylenesulfonic acid, allylsulfonic acid, and methallylsulfonic acid and their salts.

Examples of the amino group-containing compounds include vinylamine, allylamine, polyoxyethyleneallylamine, polyoxypropyleneallylamine, polyoxyethylenevinylamine, and polyoxypropylenevinylamine.

Preferred among these are monomers having a radically polymerizable unsaturated double bond and a functional group such as a carboxylic acid group, a sulfonic acid group, a sulfonic acid group salt, a pyrrolidone ring group, an amide group, or an amino group. Specific examples of preferable monomers include dicarboxylic acids having a radically polymerizable unsaturated double bond such as itaconic acid, monocarboxylic acids having a radically polymerizable unsaturated double bond such as acrylic acid, their derivatives (e.g., salts, esters), sulfonic acid group-containing compounds such as (meth)acrylamido alkane sulfonic acids and their salts, N-vinylamides such as N-vinylformamide and N-vinylpyrrolidone, and amino group-containing compounds such as vinylamine and allylamine.

Examples of the polymerization catalyst used in the polymerization include 2-ethylhexyl peroxydicarbonate (Trigonox EHP, available from Tianjin McEIT Co., Ltd.), 2,2'-azobisisobutyronitrile (AIBN), t-butyl peroxyneodecanoate, bis(4-t-butylcyclohexyl) peroxydicarbonate, di-n-propyl peroxydicarbonate, di-n-butyl peroxydicarbonate, di-cetyl peroxydicarbonate, and di-s-butyl peroxydicarbonate. The polymerization catalysts may be used alone or in combination of two or more thereof.

Examples of commercially available polymerization catalysts include Kayacarbon EH-C70 and Trigonox EHP-70 (both available from Kayaku Akzo Co., Ltd.).

The polymerization is preferably performed by a method in which continuous stirred-tank reactors in series are used. The number of continuous stirred-tanks may be any number not less than two.

The following describes a method in which continuous stirred-tank reactors in series, i.e., two tanks in series, are used.

The polymerization method includes continuously feeding the vinyl ester, different unsaturated monomer, polymerization initiator, and solvent to a first tank. The vinyl ester, different unsaturated monomer, and polymerization initiator may be fed by any method. For example, a vinyl ester solution, a different unsaturated monomer solution, and a polymerization initiator solution are separately prepared and fed. Alternatively, a monomer solution containing the vinyl ester and different unsaturated monomer and a polymerization initiator solution are prepared and fed.

With the amount of the vinyl ester fed to the first tank taken as 100 parts by weight, the amount of the different unsaturated monomer fed to the first tank is preferably 0.001 to 5 parts by weight, more preferably 0.01 to 3 parts by weight.

With the amount of the monomers (including the vinyl ester and different unsaturated monomer) fed to the first tank taken as 100 parts by weight, the amount of the polymerization initiator fed to the first tank is preferably 0.001 to 1 part by weight, more preferably 0.01 to 0.5 parts by weight.

With the amount of the monomers (including the vinyl ester and different unsaturated monomer) fed to the first tank taken as 100 parts by weight, the amount of the solvent fed to the first tank is preferably 5 to 80 parts by weight, more preferably 10 to 40 parts by weight.

The components fed to the first tank preferably have a mean residence time $MRT_1$ of 2 to 20 hours, more preferably 5 to 15 hours in the first tank. The mean residence time indicates how long the components fed to a reaction tank stay inside the reaction tank. It can be adjusted based on the volume of the reaction solution in the reaction tank and the volumetric flow rate of the components fed to the tank. For example, when the volume of the reaction solution in the first tank is 180 L and the volumetric flow rate of the components fed to the first tank is 5 ml/sec, the mean residence time is 10 hours.

The first tank preferably has a temperature $T_1$ of 50°C to 150°C, more preferably 70°C to 120°C.

In the first tank, the reaction solution is preferably polymerized with stirring. The stirring is preferably performed under such conditions that $V_1/M_1$ is 0.009 to 0.143 (L/kg), more preferably 0.01 to 0.1 (L/kg), where $V_1$ is the vortex volume (L), and $M_1$ is the weight (kg) of the reaction solution.

When $V_1/M_1$ is 0.009 (L/kg) or greater, volatilized monomers return to the liquid phase. This circulation enhances the reactivity. When $V_1/M_1$ is 0.143 (L/kg) or less, the monomers taken in the liquid phase are less likely to be released to the gas phase again, leading to uniform reaction.

The vortex volume means the volume of a vortex generated at the gas-liquid interface in stirring. The vortex volume can be calculated, for example, using a thermal fluid and powder analysis software R-FLOW (available from R-flow Corporation, Ltd.) Specifically, it can be calculated based on the distance between the center of the impeller and the gas-liquid phase interface in stirring. The impeller, which generates stirring, causes pressure in the solution in stirring, creating a positive pressure in the liquid phase and a negative pressure in the gas phase. The gas-liquid phase interface thus can be identified as the boundary between the positive and negative pressures.

In the first tank, the impeller in stirring preferably has a rotation rate of 10 to 500 rpm, more preferably 50 to 250 rpm. The first tank preferably has a capacity of 0.01 to 100 $m^3$, more preferably 0.05 to 50 $m^3$.

In the first tank, $D_1/H_1$ is preferably adjusted to 0.3 to 0.9 (m/m), more preferably 0.35 to 0.8 (m/m), where $D_1$ is the distance (m) from the liquid surface to the impeller, and $H_1$ is the height (m) of the liquid surface. The height of the liquid surface means the distance between the bottom of the reaction tank and the surface of the reaction solution when the reaction solution in the reaction tank is not being stirred. The distance between the liquid surface and the impeller means the distance between the liquid surface and the topmost portion of the impeller.

In the first tank, $BD_1/VD_1$ is preferably 0.1 to 0.5 (m/m), more preferably 0.15 to 0.35 (m/m), where $BD_1$ is the impeller diameter (m), and $VD_1$ is the inner diameter (m) of the reaction tank.

Employing the above stirring conditions allows the reaction to proceed uniformly.

In the polymerization method, the polymerized solution (1) is continuously discharged from the first tank and continuously fed to a second tank, while the amount of the reaction solution in the first tank is kept constant. In addition to the polymerized solution (1), the vinyl ester, different unsaturated monomer, polymerization initiator, and/or the like may be

continuously fed.

With the amount of the vinyl ester fed to the first tank taken as 100 parts by weight, the amount of the vinyl ester fed to the second tank is preferably 0 to 50 parts by weight, more preferably 5 to 30 parts by weight.

With the amount of the unsaturated monomer fed to the first tank taken as 100 parts by weight, the amount of the unsaturated monomer fed to the second tank is preferably 50 to 200 parts by weight, more preferably 75 to 150 parts by weight.

With the amount of the polymerization initiator fed to the first tank taken as 100 parts by weight, the amount of the polymerization initiator fed to the second tank is preferably 50 to 150 parts by weight, more preferably 80 to 120 parts by weight.

With the amount of the solvent fed to the first tank taken as 100 parts by weight, the amount of the solvent fed to the second tank is preferably 50 to 150 parts by weight, more preferably 80 to 120 parts by weight.

With the amount of the vinyl ester fed to the first and second tanks taken as 100 parts by weight, the amount of the unsaturated monomer fed to the first and second tanks is preferably 1 to 50 parts by weight, more preferably 10 to 30 parts by weight.

With the amount of the monomers (including the vinyl ester and different unsaturated monomer) fed to the first and second tanks taken as 100 parts by weight, the amount of the polymerization initiator fed to the first and second tanks is preferably 0.001 to 1 part by weight, more preferably 0.01 to 0.5 parts by weight.

With the amount of the monomers (including the vinyl ester and different unsaturated monomer) fed to the first and second tanks taken as 100 parts by weight, the amount of the solvent fed to the first and second tanks is preferably 5 to 60 parts by weight, more preferably 10 to 40 parts by weight.

The components fed to the second tank preferably have a mean residence time $MRT_2$ of 1.5 to 8 hours, more preferably 2.5 to 7.5 hours in the second tank.

The ratio of the mean residence time $MRT_2$ in the second tank to the mean residence time $MRT_1$ in the first tank ($MRT_2/MRT_1$) is preferably 0.3 to 0.9, more preferably 0.35 to 0.7.

The second tank preferably has a temperature $T_2$ of 60°C to 100°C, more preferably 70°C to 90°C.

The ratio of the temperature $T_2$ of the second tank to the temperature $T_1$ of the first tank ($T_2/T_1$) is preferably 0.6 to 1.5, more preferably 0.9 to 1.2.

In the second tank, the reaction solution is preferably polymerized with stirring. The stirring is preferably performed under such conditions that $V_2/M_2$ is 0.04 to 0.18 (L/kg), more preferably 0.06 to 0.15 (L/kg), where $V_2$ is the vortex volume (L), and $M_2$ is the weight (kg) of the reaction solution.

When $V_2/M_2$ is 0.04 (L/kg) or greater, volatilized unsaturated monomers return to the liquid phase. This circulation can enhance the reactivity. When $V_2/M_2$ is 0.18 (L/kg) or less, the monomers taken in the liquid phase are less likely to be released to the gas phase again, thus allowing localization of the unsaturated monomers in the reaction.

In the second tank, the impeller in stirring preferably has a rotation rate of 10 to 500 rpm, more preferably 100 to 400 rpm. The second tank preferably has a capacity of 0.01 to 100 $m^3$, more preferably 1 to 50 $m^3$.

In the second tank, $D_2/H_2$ is preferably adjusted to 0.3 to 0.9 (m/m), more preferably 0.35 to 0.6 (m/m), where $D_2$ is the distance (m) from the liquid surface to the impeller, and $H_2$ is the height (m) of the liquid surface.

In the second tank, $BD_2/VD_2$ is preferably 0.1 to 0.5 (m/m), more preferably 0.2 to 0.4 (m/m), where $BD_2$ is the impeller diameter (m), and $VD_2$ is the inner diameter (m) of the reaction tank.

Employing the above stirring conditions allows localization of the unsaturated monomers, thus further enhancing the changes in properties due to the modified groups.

Regarding the ratio of the vortex volume to the weight of the reaction solution among the stirring conditions in the first and second tanks, the ratio of $V_2/M_2$ to $V_1/M_1$ ($[V_2/M_2]/[V_1/M_1]$) is preferably 0.9 to 1.5, more preferably 1.0 to 1.2.

Regarding the ratio of the distance between the liquid surface and the impeller to the height of liquid surface, the ratio of $D_2/H_2$ to $D_1/H_1$ ($[D_2/H_2]/[D_1/H_1]$) is preferably 0.9 to 1.5, more preferably 1.0 to 1.2.

Regarding the ratio of the impeller diameter to the inner diameter of the reaction tank, the ratio of $BD_2/VD_2$ to $BD_1/VD_1$ ($[BD_2/VD_2]/[BD_1/VD_1]$) is preferably 0.9 to 1.5, more preferably 1.0 to 1.2.

In the polymerization method, the polymerized solution (2) is continuously discharged from the second tank while the amount of the reaction solution in the second tank is kept constant. Thus, a vinyl ester copolymer can be obtained.

Saponifying the obtained vinyl ester by adding a saponification catalyst can provide a polyvinyl alcohol resin with predetermined physical properties.

In particular, saponifying the vinyl ester copolymer obtained by the above method, which satisfies the reaction conditions in the first and second tanks, can provide a polyvinyl alcohol resin with predetermined physical properties.

Examples of the saponification catalyst used in saponification include alkali catalysts such as sodium hydroxide, potassium hydroxide, sodium alcoholate, and sodium carbonate, and acid catalysts such as sulfuric acid, phosphoric acid, and hydrochloric acid. Alkali catalysts are preferred because they can increase the saponification rate to improve the productivity. Sodium hydroxide is particularly preferred.

The amount of the saponification catalyst added is preferably 1.4 to 30 parts by weight, more preferably 2 to 25

parts by weight relative to 100 parts by weight of the vinyl ester copolymer.

The saponification catalyst is added to the vinyl ester copolymer preferably at a caustic molar ratio (CMR, the molar ratio between the base and the acetyl groups on PVAc) of 0.01 to 0.8, more preferably 0.03 to 0.6.

The saponification catalyst may be added by any method. It may be added all at once at an early stage of the saponification reaction, or part of it may be added at an early stage of the saponification reaction and the rest may be added in the course of the saponification reaction.

The reaction temperature in the saponification is preferably 15°C to 80°C, more preferably 20°C to 60°C.

The reaction time in the saponification is preferably 0.4 to 5 hours, more preferably 0.5 to 4 hours.

If necessary, residual saponification catalyst may be neutralized after saponification. The neutralization may be performed using a neutralizing agent, for example, an organic acid such as acetic acid or lactic acid.

The polyvinyl alcohol resin obtained by the above method satisfies the predetermined relation between the permittivity A at 25°C and permittivity B at 125°C measured at 1 kHz.

The above method can produce a high-polarity polyvinyl alcohol resin. Such a polyvinyl alcohol resin is considered to provide a film that undergoes little change in performance even at high temperature. Especially a polyvinyl alcohol resin with specific modified groups is considered to undergo less change in permittivity at high temperature. The above method is considered to allow block-wise distribution of the modified groups, resulting in a polyvinyl alcohol resin with very high polarity.

The polyvinyl alcohol resin is soluble in aqueous solvents, and thus can be used to produce a film roll with an aqueous solvent. This eliminates the need for organic solvents, which greatly affect the environment. The polyvinyl alcohol resin undergoes little change in permittivity even at high temperature and can be suitably used as a material of a film for film capacitors.

The polyvinyl alcohol resin of the present invention has excellent solubility. For example, the polyvinyl alcohol resin may be formed into a film and, and a film roll including the film can be suitably used as, other than a material of a film for film capacitors, a packaging material for packing various products such as agrochemicals, medicines, dyes, detergents, fertilizers, cosmetics, and sanitary goods. The polyvinyl alcohol resin can also be suitably used in applications such as viscosity adjusters of aqueous solutions, gas barrier coating agents, suspending agents, emulsifying agents, polarizing plates, water-soluble films, and dispersants.

The present invention also encompasses a film roll including the polyvinyl alcohol resin.

Acetalizing the polyvinyl alcohol resin by reacting it with an aldehyde can provide a polyvinyl acetal resin.

The present invention also encompasses a polyvinyl acetal resin that is an acetalized product of the polyvinyl alcohol resin.

- Advantageous Effects of Invention

The present invention can provide a polyvinyl alcohol resin that can provide a film having high capacitance retention at high temperature and having excellent strength and flexibility.

DESCRIPTION OF EMBODIMENTS

The present invention will be described in more detail with reference to examples below. The present invention should not be limited to these examples.

(Example 1)

(Production of polyvinyl acetate)

Continuous stirred-tank reactors in series, in which a glass-lined reaction tank with an inner capacity of 300 L (first tank) and a glass-lined reaction tank with an inner capacity of 300 L (second tank) were connected in series via a metering pump, were used.

A solution of vinyl acetate and vinylamine in methanol (monomer solution (1)) was provided. A solution of 2,2'-azobisisobutyronitrile in methanol (initiator solution (1)) was provided.

The monomer solution (1) and the initiator solution (1) were continuously fed to the first tank via separate metering pumps as feed lines while adjustments were made such that 2 parts by weight of vinylamine, 0.01 parts by weight of the polymerization initiator, and 30 parts by weight of the solvent were fed relative to 100 parts by weight of vinyl acetate. With the internal temperature kept at 80°C, the reaction solution (mixture of the monomer solution (1) and initiator solution (1)) was polymerized at a mean residence time of 10 hours with stirring such that the ratio ($V_1/M_1$) of the volume $V_1$ (L) of the vortex generated at the gas-liquid interface by the stirring to the weight $M_1$ (kg) of the reaction solution in the first tank was 0.07 (L/kg). The polymerized solution (1) was continuously discharged from the first tank and fed to the second tank, such

that the amount of the reaction solution in the first tank was constant at 180 kg. The height of the impeller was adjusted such that the ratio ($D_1/H_1$) of the distance $D_1$ from the liquid surface to the impeller to the height $H_1$ of liquid surface was 0.5 (m/m). The ratio ($BD_1/VD_1$) of the impeller diameter $BD_1$ to the inner diameter $VD_1$ of the reaction tank was 0.3 (m/m).

To the second tank was continuously fed the polymerized solution (1) from the first tank, as well as a solution of vinyl acetate and vinylamine in methanol (monomer solution (2)) and a solution of 2,2'-azobisisobutyronitrile in methanol (initiator solution (2)) while adjustments were made such that 30 parts by weight of vinyl acetate, 20 parts by weight of vinylamine, 0.01 parts by weight of the polymerization initiator, and 50 parts by weight of the solvent were fed to the second tank relative to 100 parts by weight of the vinyl acetate fed to the first tank. With the internal temperature kept at 80°C, the reaction solution (mixture of the polymerized solution (1), monomer solution (2), and initiator solution (2)) was polymerized at a mean residence time of 5 hours with stirring such that the ratio ($V_2/M_2$) of the volume $V_2$ (L) of the vortex generated at the gas-liquid interface by the stirring and the weight $M_2$ (kg) of the reaction solution in the second tank was 0.07 (L/kg). The polymerized solution (2) was continuously discharged from the second tank such that the amount of the reaction solution in the second tank was constant at 150 kg. The height of the impeller was adjusted such that the ratio ($D_2/H_2$) of the distance $D_2$ from the liquid surface to the impeller to the height $H_2$ of liquid surface was 0.6 (m/m). The ratio ($BD_2/VD_2$) of the impeller diameter $BD_2$ to the inner diameter $VD_2$ of the reaction tank was 0.4 (m/m).

Methanol vapor was introduced to the polymerized solution (2) discharged from the second tank to remove unreacted monomers. Thus, a solution of a polyvinyl acetate (PVAc-1) in methanol was obtained.

(Production of polyvinyl alcohol resin)

Methanol was added to the obtained PVAc-1 to a concentration of 35% by weight, whereby a PVAc solution was prepared. To this PVAc solution was added sodium hydroxide as a saponification catalyst at a caustic molar ratio (CMR, the molar ratio between the base and the acetyl groups on PVAc) of 0.02. The solution was held at 40°C for three hours for saponification. The solidified polymer was pulverized using a pulverizer, washed with methanol, and dried in an oven. Thus, a polyvinyl alcohol resin (1) containing an amino group-containing structural unit represented by the following formula (9-1) was obtained.

[Chem. 9]

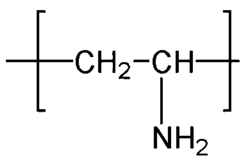

(9−1)

(Example 2)

A polyvinyl alcohol resin (2) was obtained as in Example 1 except for the following changes: in the first tank, adjustments were made such that 20 parts by weight of vinylamine, 0.005 parts by weight of the polymerization initiator, and 15 parts by weight of the solvent were fed relative to 100 parts by weight of vinyl acetate; in the second tank, adjustments were made such that 30 parts by weight of vinyl acetate, 40 parts by weight of vinylamine, 0.01 parts by weight of the polymerization initiator, and 50 parts by weight of the solvent were fed to the second tank relative to 100 parts by weight of the vinyl acetate fed to the first tank; and the temperature, $V_1/M_1$, $D_1/H_1$, $BD_1/VD_1$, and mean residence time in the first tank, the temperature, $V_2/M_2$, $D_2/H_2$, $BD_2/VD_2$, and mean residence time in the second tank, the amount of the saponification catalyst added, and the saponification time were changed as shown in Table 1.

(Example 3)

A polyvinyl alcohol resin (3) containing a sulfonic acid group-containing structural unit represented by the following formula (6-1-1) was obtained as in Example 1 except for the following changes: sodium 2-acrylamido-2-methylpropanesulfonate (AMPS) was used instead of vinylamine; and in the first tank, adjustments were made such that 3 parts by weight of AMPS was fed relative to 100 parts by weight of vinyl acetate.

[Chem. 10]

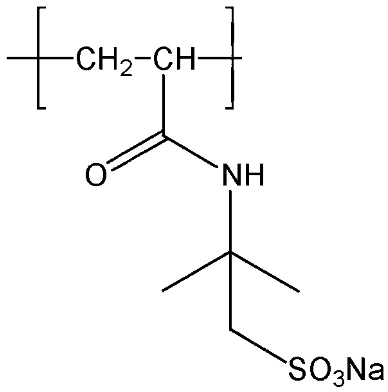

(6-1-1)

(Example 4)

A polyvinyl alcohol resin (4) containing a pyrrolidone ring group-containing structural unit represented by the following formula (7) was obtained as in Example 1 except for the following changes: N-vinylpyrrolidone was used instead of vinylamine; and in the first tank, adjustments were made such that 3 parts by weight of N-vinylpyrrolidone was fed relative to 100 parts by weight of vinyl acetate.

[Chem. 11]

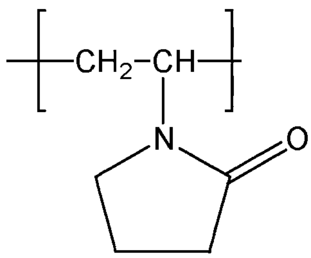

(7)

(Example 5)

A polyvinyl alcohol resin (5) containing a carboxy group-containing structural unit represented by the following formula (5-1-1) was obtained as in Example 1 except for the following changes: itaconic acid was used instead of vinylamine; in the first tank, adjustments were made such that 3 parts by weight of itaconic acid was fed relative to 100 parts by weight of vinyl acetate; and the temperature, $V_1/M_1$, $D_1/H_1$, $BD_1/VD_1$, and mean residence time in the first tank, the temperature, $V_2/M_2$, $D_2/H_2$, $BD_2/VD_2$, and mean residence time in the second tank, the amount of the saponification catalyst added, and the saponification time were changed as shown in Table 1.

[Chem. 12]

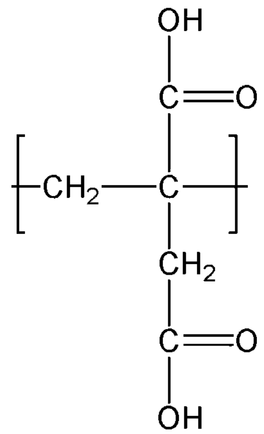

(5 − 1 − 1)

(Example 6)

A polyvinyl acetate (PVAc-6) was produced as in Example 1 except that itaconic acid was used instead of vinylamine, and that the temperature, $V_1/M_1$, $D_1/H_1$, $BD_1/VD_1$, and mean residence time in the first tank, and the temperature, $V_2/M_2$, $D_2/H_2$, $BD_2/VD_2$, and mean residence time in the second tank were as shown in Table 1.

A polyvinyl acetate (PVAc-7) was produced as in Example 1 except that no vinylamine was added, and that the temperature, $V_1/M_1$, $D_1/H_1$, $BD_1/VD_1$, and mean residence time in the first tank, and the temperature, $V_2/M_2$, $D_2/H_2$, $BD_2/VD_2$, and mean residence time in the second tank were as shown in Table 1.

A polyvinyl alcohol resin (6) was produced as in Example 1 except that in (Production of polyvinyl alcohol resin), a PVAc solution with a weight ratio between PVAc-6 and PVAc-7 of 50:50 was produced.

(Examples 7 to 35 and Comparative Examples 1 to 26)

Polyvinyl alcohol resins were produced as in Example 1 except that the type of the different unsaturated monomer, the temperature, $V_1/M_1$, $D_1/H_1$, $BD_1/VD_1$, and mean residence time in the first tank, the temperature, $V_2/M_2$, $D_2/H_2$, $BD_2/VD_2$, and mean residence time in the second tank, the amount of the saponification catalyst added, and the saponification time were changed as shown in Tables 1 to 4.

(Evaluation)

The polyvinyl alcohol resins obtained in the examples and the comparative examples were evaluated as follows. Tables 5 to 10 show the results.

(1) Hydroxy group content, residual acetyl group content, and modified group content

The obtained polyvinyl alcohol resin was dissolved in deuterium oxide at a concentration of 1% by weight, and the solution was used to measure the hydroxy group content, the residual acetyl group content, and the modified group content by $^1$H-NMR.

(2) Viscosity average degree of polymerization

A 4% by weight aqueous solution of the obtained polyvinyl alcohol resin was prepared and used to measure the viscosity average degree of polymerization by a method in conformity with JIS K6726-1994.

(3) Permittivity

The polyvinyl alcohol resin was added to water at 95°C or higher to 10% by weight, stirred for two hours or longer for dissolution, then cooled to 25°C, and sufficiently defoamed. The obtained polyvinyl alcohol resin solution was applied with a 1-mm-thick clearance and then dried in a gear oven at 90°C for five hours or longer, whereby a film roll for film capacitors was obtained. The film was made of the polyvinyl alcohol resin and had a thickness of 0.05 mm. A 40-mm-square piece of film was cut out from the obtained film roll. Platinum electrodes (diameter 20 mm, thickness 0.1 μm) were

formed on both surfaces of the piece by sputtering, whereby a sample was produced. Using the obtained sample, the permittivity A was measured at 25°C at 1 kHz with an LCR meter (E4980AL, available from Keysight Technologies). Similarly, the permittivity B was measured at 125°C at 1 kHz, and B/A was calculated.

(4) Solubility parameter

The solubility parameter was determined by the Fedors method.

(5) Capacitance and capacitance retention

As in the permittivity evaluation, a 40-mm-square piece of film was cut out, and platinum electrodes (diameter 20 mm, thickness 0.1 μm) were formed on both surfaces of the piece by sputtering, whereby a sample was produced. The capacitance was measured as follows. A 4-terminal probe 9140 was attached to LCR HiTESTER 3522-50 available from Hioki E.E. Corp. The two terminals (leads) of the film capacitor element were held with the 4-terminal probe 9140, and an alternating voltage was applied at 0.1 V at 1 kHz using the built-in power source of LCR HiTESTER 3522-50. When the indicated value stabilized, the capacitance value was read. The measurement conditions other than those described here were in conformity with JIS C 5101-16:2009 "4.2.2 Capacitance".

Similarly, the capacitance at 125°C was measured and then divided by the capacitance at 25°C to give the capacitance retention.

(6) Breaking strength and elongation at break

A piece of film (width 20 mm, length 100 mm) was cut out from the film roll for film capacitors obtained in (3) Permittivity, whereby a sample was produced. The obtained sample was subjected to a tensile test using a TENSILON tensile tester (Autograph AGS-X 500N, available from Shimadzu Corporation) at 25°C and a tensile speed of 510 mm/sec, whereby the breaking strength (MPa) and the elongation at break (%) were measured.

(7) Breakdown voltage

A 100-mm-square piece of film was cut out from the film roll for film capacitors obtained in (3) Permittivity, whereby a sample was produced. The breakdown voltage of the obtained sample was measured at 25°C in silicone oil. The breakdown voltage (kV/mm) was measured at a voltage increase rate of 50 V/sec using a breakdown voltage meter (in-oil test electrode device TOJ-200, available from Tamadensoku Co., Ltd.) with a cylindrical upper electrode having a diameter of 6.425 mm and a cylindrical lower electrode having a diameter of 75 mm.

(8) Cracking of winding

A polyvinyl alcohol film was produced as in (3) Permittivity, and 1 m of the film was wound around a 3-inch core and then unwound. The number of cracks upon unwinding was visually determined and evaluated in accordance with the following criteria.

1: The film had no cracks.
2: The film had 1 to 5 cracks near the core.
3: The film had 10 to 50 cracks across the film.
4: The film had 51 or more cracks across the film.

[Table 1]

| | | Production of polyvinyl acetate | | | | | | | | | | | Saponification | |
|---|---|---|---|---|---|---|---|---|---|---|---|---|---|---|
| | | Type of different unsaturated monomer | First tank | | | | | Second tank | | | | | Saponification catalyst addition amount (caustic molar ratio) | Time (h) |
| | | | Temperature (°C) | $V_1/M_1$ (L/kg) | $D_1/H_1$ | $BD_1/VD_1$ | Mean residence time (h) | Temperature (°C) | $V_2/M_2$ (L/kg) | $D_2/H_2$ | $BD_2/VD_2$ | Mean residence time (h) | | |
| Example 1 | PVAc-1 | Vinylamine | 80 | 0.07 | 0.5 | 0.3 | 10 | 80 | 0.07 | 0.6 | 0.4 | 5 | 0.02 | 3 |
| Example 2 | PVAc-2 | Vinylamine | 72 | 0.07 | 0.5 | 0.3 | 14 | 80 | 0.07 | 0.6 | 0.4 | 5 | 0.015 | 2.5 |
| Example 3 | PVAc-3 | AMPS | 80 | 0.07 | 0.5 | 0.3 | 10 | 80 | 0.07 | 0.6 | 0.4 | 5 | 0.02 | 3 |
| Example 4 | PVAc-4 | N-vinylpyrrolidone | 80 | 0.07 | 0.5 | 0.3 | 10 | 80 | 0.07 | 0.6 | 0.4 | 5 | 0.02 | 3 |
| Example 5 | PVAc-5 | Itaconic acid | 80 | 0.05 | 0.5 | 0.3 | 10 | 80 | 0.05 | 0.6 | 0.4 | 5 | 0.01 | 2 |
| Example 6 | PVAc-6 | Itaconic acid | 80 | 0.05 | 0.5 | 0.3 | 10 | 80 | 0.05 | 0.6 | 0.4 | 5 | 0.02 | 3 |
| | PVAc-7 | - | 80 | 0.07 | 0.5 | 0.3 | 2 | 80 | 0.07 | 0.6 | 0.4 | 5 | | |
| Example 7 | PVAc-8 | Vinylamine | 55 | 0.07 | 0.5 | 0.3 | 10 | 80 | 0.07 | 0.6 | 0.4 | 5 | 0.02 | 3 |
| Example 8 | PVAc-9 | Vinylamine | 145 | 0.07 | 0.5 | 0.3 | 10 | 80 | 0.07 | 0.6 | 0.4 | 5 | 0.02 | 3 |
| Example 9 | PVAc-10 | Vinylamine | 80 | 0.01 | 0.5 | 0.3 | 10 | 80 | 0.07 | 0.6 | 0.4 | 5 | 0.02 | 3 |
| Example 10 | PVAc-11 | Vinylamine | 80 | 0.14 | 0.5 | 0.3 | 10 | 80 | 0.07 | 0.6 | 0.4 | 5 | 0.02 | 3 |
| Example 11 | PVAc-12 | Vinylamine | 80 | 0.07 | 0.5 | 0.3 | 2.5 | 80 | 0.07 | 0.6 | 0.4 | 5 | 0.02 | 3 |
| Example 12 | PVAc-13 | Vinylamine | 80 | 0.07 | 0.5 | 0.3 | 19 | 80 | 0.07 | 0.6 | 0.4 | 5 | 0.02 | 3 |
| Example 13 | PVAc-14 | Vinylamine | 80 | 0.07 | 0.5 | 0.3 | 10 | 65 | 0.07 | 0.6 | 0.4 | 5 | 0.02 | 3 |

(continued)

| | | Production of polyvinyl acetate | | | | | | | | | | | Saponification | |
|---|---|---|---|---|---|---|---|---|---|---|---|---|---|---|
| | | Type of different unsaturated monomer | First tank | | | | | Second tank | | | | | Saponification catalyst addition amount (caustic molar ratio) | Time (h) |
| | | | Temperature (°C) | $V_1/M_1$ (L/kg) | $D_1/H_1$ | $BD_1/VD_1$ | Mean residence time (h) | Temperature (°C) | $V_2/M_2$ (L/kg) | $D_2/H_2$ | $BD_2/VD_2$ | Mean residence time (h) | | |
| Example 14 | PVAc-15 | Vinylamine | 80 | 0.07 | 0.5 | 0.3 | 10 | 95 | 0.07 | 0.6 | 0.4 | 5 | 0.02 | 3 |
| Example 15 | PVAc-16 | Vinylamine | 80 | 0.07 | 0.5 | 0.3 | 10 | 80 | 0.05 | 0.6 | 0.4 | 5 | 0.02 | 3 |
| Example 16 | PVAc-17 | Vinylamine | 80 | 0.07 | 0.5 | 0.3 | 10 | 80 | 0.17 | 0.6 | 0.4 | 5 | 0.02 | 3 |
| Example 17 | PVAc-18 | Vinylamine | 80 | 0.07 | 0.5 | 0.3 | 10 | 80 | 0.07 | 0.6 | 0.4 | 2.5 | 0.02 | 3 |

[Table 2]

| | | Production of polyvinyl acetate | | | | | | | | | | | Saponification | |
|---|---|---|---|---|---|---|---|---|---|---|---|---|---|---|
| | | Type of different unsaturated monomer | First tank | | | | | Second tank | | | | | Saponification catalyst addition amount (caustic molar ratio) | Time (h) |
| | | | Temperature (°C) | $V_1/M_1$ (L/kg) | $D_1/H_1$ | $BD_1/VD_1$ | Mean residence time (h) | Temperature (°C) | $V_2/M_2$ (L/kg) | $D_2/H_2$ | $BD_2/VD_2$ | Mean residence time (h) | | |
| Example 18 | PVAc-19 | Vinylamine | 80 | 0.07 | 0.5 | 0.3 | 10 | 80 | 0.07 | 0.6 | 0.4 | 7 | 0.02 | 3 |
| Example 19 | PVAc-20 | Vinylamine | 80 | 0.07 | 0.35 | 0.3 | 10 | 80 | 0.07 | 0.6 | 0.4 | 5 | 0.02 | 3 |
| Example 20 | PVAc-21 | Vinylamine | 80 | 0.07 | 0.85 | 0.3 | 10 | 80 | 0.07 | 0.6 | 0.4 | 5 | 0.02 | 3 |
| Example 21 | PVAc-22 | Vinylamine | 80 | 0.07 | 0.5 | 0.15 | 10 | 80 | 0.07 | 0.6 | 0.4 | 5 | 0.02 | 3 |
| Example 22 | PVAc-23 | Vinylamine | 80 | 0.07 | 0.5 | 0.45 | 10 | 80 | 0.07 | 0.6 | 0.4 | 5 | 0.02 | 3 |
| Example 23 | PVAc-24 | Vinylamine | 80 | 0.07 | 0.5 | 0.3 | 10 | 80 | 0.07 | 0.35 | 0.4 | 5 | 0.02 | 3 |
| Example 24 | PVAc-25 | Vinylamine | 80 | 0.07 | 0.5 | 0.3 | 10 | 80 | 0.07 | 0.85 | 0.4 | 5 | 0.02 | 3 |
| Example 25 | PVAc-26 | Vinylamine | 80 | 0.07 | 0.5 | 0.3 | 10 | 80 | 0.07 | 0.6 | 0.15 | 5 | 0.02 | 3 |
| Example 26 | PVAc-27 | Vinylamine | 80 | 0.07 | 0.5 | 0.3 | 10 | 80 | 0.07 | 0.6 | 0.45 | 5 | 0.02 | 3 |
| Example 27 | PVAc-52 | AMPS | 145 | 0.07 | 0.5 | 0.3 | 10 | 95 | 0.07 | 0.6 | 0.4 | 5 | 0.02 | 3 |
| Example 28 | PVAc-53 | AMPS | 55 | 0.07 | 0.5 | 0.3 | 10 | 65 | 0.07 | 0.6 | 0.4 | 5 | 0.02 | 3 |
| Example 29 | PVAc-54 | AMPS | 145 | 0.07 | 0.5 | 0.3 | 10 | 65 | 0.07 | 0.6 | 0.4 | 5 | 0.02 | 3 |
| Example 30 | PVAc-55 | AMPS | 55 | 0.07 | 0.5 | 0.3 | 10 | 95 | 0.07 | 0.6 | 0.4 | 5 | 0.02 | 3 |

(continued)

| | | Production of polyvinyl acetate | | | | | | | | | | | Saponification | |
|---|---|---|---|---|---|---|---|---|---|---|---|---|---|---|
| | | | First tank | | | | | Second tank | | | | | | |
| | | Type of different unsaturated monomer | Temperature (°C) | $V_1/M_1$ (L/kg) | $D_1/H_1$ | $BD_1/VD_1$ | Mean residence time (h) | Temperature (°C) | $V_2/M_2$ (L/kg) | $D_2/H_2$ | $BD_2/VD_2$ | Mean residence time (h) | Saponification catalyst addition amount (caustic molar ratio) | Time (h) |
| Example 31 | PVAc-56 | AMPS | 80 | 0.14 | 0.5 | 0.3 | 10 | 80 | 0.17 | 0.6 | 0.4 | 5 | 0.02 | 3 |
| Example 32 | PVAc-57 | AMPS | 80 | 0.01 | 0.5 | 0.3 | 10 | 80 | 0.05 | 0.6 | 0.4 | 5 | 0.02 | 3 |
| Example 33 | PVAc-58 | AMPS | 80 | 0.14 | 0.5 | 0.3 | 10 | 80 | 0.05 | 0.6 | 0.4 | 5 | 0.02 | 3 |
| Example 34 | PVAc-59 | AMPS | 80 | 0.01 | 0.5 | 0.3 | 10 | 80 | 0.17 | 0.6 | 0.4 | 5 | 0.02 | 3 |
| Example 35 | PVAc-60 | AMPS | 80 | 0.01 | 0.5 | 0.3 | 10 | 80 | 0.17 | 0.6 | 0.4 | 5 | 0.1 | 3 |

[Table 3]

| | | Production of polyvinyl acetate | | | | | | | | | | | Saponification | |
|---|---|---|---|---|---|---|---|---|---|---|---|---|---|---|
| | | Type of different unsaturated monomer | First tank | | | | | Second tank | | | | | Saponification catalyst addition amount (caustic molar ratio) | Time (h) |
| | | | Temperature (°C) | $V_1/M_1$ (L/kg) | $D_1/H_1$ | $BD_1/VD_1$ | Mean residence time (h) | Temperature (°C) | $V_2/M_2$ (L/kg) | $D_2/H_2$ | $BD_2/VD_2$ | Mean residence time (h) | | |
| Comparative Example 1 | PVAc-28 | - | 80 | 0.07 | 0.5 | 0.3 | 2 | 80 | 0.07 | 0.6 | 0.4 | 5 | 0.02 | 3 |
| Comparative Example 2 | PVAc-29 | AMPS | 60 | - | 0.5 | 0.3 | 2.5 | 80 | - | 0.6 | 0.4 | 5 | 0.02 | 3 |
| Comparative Example 3 | PVAc-30 | N-vinylformamide | 60 | - | 0.5 | 0.3 | 3.5 | - | - | - | - | - | 0.016 | 2.5 |
| Comparative Example 4 | PVAc-31 | Vinylamine | 40 | 0.07 | 0.5 | 0.3 | 10 | 80 | 0.07 | 0.6 | 0.4 | 5 | 0.02 | 3 |
| Comparative Example 5 | PVAc-32 | Vinylamine | 160 | 0.07 | 0.5 | 0.3 | 10 | 80 | 0.07 | 0.6 | 0.4 | 5 | 0.02 | 3 |
| Comparative Example 6 | PVAc-33 | Vinylamine | 80 | 0.005 | 0.5 | 0.3 | 10 | 80 | 0.07 | 0.6 | 0.4 | 5 | 0.02 | 3 |
| Comparative Example 7 | PVAc-34 | Vinylamine | 80 | 0.15 | 0.5 | 0.3 | 10 | 80 | 0.07 | 0.6 | 0.4 | 5 | 0.02 | 3 |
| Comparative Example 8 | PVAc-35 | Vinylamine | 80 | 0.07 | 0.5 | 0.3 | 1 | 80 | 0.07 | 0.6 | 0.4 | 5 | 0.02 | 3 |
| Comparative Example 9 | PVAc-36 | Vinylamine | 80 | 0.07 | 0.5 | 0.3 | 22 | 80 | 0.07 | 0.6 | 0.4 | 5 | 0.02 | 3 |
| Comparative Example 10 | PVAc-37 | Vinylamine | 80 | 0.07 | 0.5 | 0.3 | 10 | 50 | 0.07 | 0.6 | 0.4 | 5 | 0.02 | 3 |
| Comparative Example 11 | PVAc-38 | Vinylamine | 80 | 0.07 | 0.5 | 0.3 | 10 | 110 | 0.07 | 0.6 | 0.4 | 5 | 0.02 | 3 |
| Comparative Example 12 | PVAc-39 | Vinylamine | 80 | 0.07 | 0.5 | 0.3 | 10 | 80 | 0.03 | 0.6 | 0.4 | 5 | 0.02 | 3 |
| Comparative Example 13 | PVAc-40 | Vinylamine | 80 | 0.07 | 0.5 | 0.3 | 10 | 80 | 0.2 | 0.6 | 0.4 | 5 | 0.02 | 3 |

[Table 4]

| | | Production of polyvinyl acetate | | | | | | | | | | | Saponification | |
|---|---|---|---|---|---|---|---|---|---|---|---|---|---|---|
| | | Type of different unsaturated monomer | First tank | | | | | Second tank | | | | | Saponification catalyst addition amount (caustic molar ratio) | Time (h) |
| | | | Temperature (°C) | $V_1/M_1$ (L/kg) | $D_1/H_1$ | $BD_1/VD_1$ | Mean residence time (h) | Temperature (°C) | $V_2/M_2$ (L/kg) | $D_2/H_2$ | $BD_2/VD_2$ | Mean residence time (h) | | |
| Comparative Example 14 | PVAc-41 | Vinylamine | 80 | 0.07 | 0.5 | 0.3 | 10 | 80 | 0.07 | 0.6 | 0.4 | 1 | 0.02 | 3 |
| Comparative Example 15 | PVAc-42 | Vinylamine | 80 | 0.07 | 0.5 | 0.3 | 10 | 80 | 0.07 | 0.6 | 0.4 | 9 | 0.02 | 3 |
| Comparative Example 16 | PVAc-43 | Vinylamine | 80 | 0.07 | 0.25 | 0.3 | 10 | 80 | 0.07 | 0.6 | 0.4 | 5 | 0.02 | 3 |
| Comparative Example 17 | PVAc-44 | Vinylamine | 80 | 0.07 | 0.95 | 0.3 | 10 | 80 | 0.07 | 0.6 | 0.4 | 5 | 0.02 | 3 |
| Comparative Example 18 | PVAc-45 | Vinylamine | 80 | 0.07 | 0.5 | 0.05 | 10 | 80 | 0.07 | 0.6 | 0.4 | 5 | 0.02 | 3 |
| Comparative Example 19 | PVAc-46 | Vinylamine | 80 | 0.07 | 0.5 | 0.6 | 10 | 80 | 0.07 | 0.6 | 0.4 | 5 | 0.02 | 3 |
| Comparative Example 20 | PVAc-47 | Vinylamine | 80 | 0.07 | 0.5 | 0.3 | 10 | 80 | 0.07 | 0.25 | 0.4 | 5 | 0.02 | 3 |
| Comparative Example 21 | PVAc-48 | Vinylamine | 80 | 0.07 | 0.5 | 0.3 | 10 | 80 | 0.07 | 0.95 | 0.4 | 5 | 0.02 | 3 |
| Comparative Example 22 | PVAc-49 | Vinylamine | 80 | 0.07 | 0.5 | 0.3 | 10 | 80 | 0.07 | 0.6 | 0.05 | 5 | 0.02 | 3 |
| Comparative Example 23 | PVAc-50 | Vinylamine | 80 | 0.07 | 0.5 | 0.3 | 10 | 80 | 0.07 | 0.6 | 0.6 | 5 | 0.02 | 3 |
| Comparative Example 24 | PVAc-61 | AMPS | 80 | 0.07 | 0.5 | 0.3 | 2.5 | - | - | - | - | - | 0.02 | 3 |
| Comparative Example 25 | PVAc-62 | AMPS | 80 | - | 0.5 | 0.3 | 2.5 | 80 | 0.07 | 0.6 | 0.4 | 5 | 0.02 | 3 |
| Comparative Example 26 | PVAc-63 | AMPS | 80 | 0.07 | 0.5 | 0.3 | 3.5 | - | - | - | - | - | 0.02 | 3 |

[Table 5]

| | | Hydroxy group content (mol%) | Residual acetyl group content (mol%) | Modified group content (mol%) | Type of modified group | Viscosity average degree of polymerization | Permittivity | | | Solubility parameter |
|---|---|---|---|---|---|---|---|---|---|---|
| | | | | | | | A (1 kHz, 25°C) | B (1 kHz, 125°C) | B/A | |
| Example 1 | Polyvinyl alcohol resin (1) | 95 | 1 | 4 | Amino group | 1300 | 4.5 | 3.60 | 0.80 | 13.0 |
| Example 2 | Polyvinyl alcohol resin (2) | 88 | 4 | 8 | Amino group | 2500 | 4.9 | 3.68 | 0.75 | 13.6 |
| Example 3 | Polyvinyl alcohol resin (3) | 95 | 1 | 4 | Sulfonic acid group | 1300 | 4.2 | 3.36 | 0.80 | 12.8 |
| Example 4 | Polyvinyl alcohol resin (4) | 95 | 1 | 4 | Pyrrolidone ring group | 1000 | 4.1 | 3.36 | 0.82 | 12.5 |
| Example 5 | Polyvinyl alcohol resin (5) | 86 | 10 | 4 | Carboxy group | 1700 | 4.0 | 3.28 | 0.82 | 12.6 |
| Example 6 | Polyvinyl alcohol resin (6) | 97 | 1 | 2 | Carboxy group | 1150 | 3.9 | 3.00 | 0.77 | 12.1 |
| Example 7 | Polyvinyl alcohol resin (7) | 95 | 1 | 4 | Amino group | 3000 | 3.5 | 2.21 | 0.63 | 12.4 |
| Example 8 | Polyvinyl alcohol resin (8) | 95 | 1 | 4 | Amino group | 1000 | 3.6 | 2.34 | 0.65 | 12.4 |
| Example 9 | Polyvinyl alcohol resin (9) | 95 | 1 | 4 | Amino group | 1300 | 3.3 | 2.11 | 0.64 | 12.4 |
| Example 10 | Polyvinyl alcohol resin (10) | 95 | 1 | 4 | Amino group | 1300 | 3.4 | 2.14 | 0.63 | 12.4 |
| Example 11 | Polyvinyl alcohol resin (11) | 95.5 | 1 | 3.5 | Amino group | 1100 | 3.4 | 2.11 | 0.62 | 12.3 |
| Example 12 | Polyvinyl alcohol resin (12) | 93 | 1 | 6 | Amino group | 1500 | 3.6 | 2.34 | 0.65 | 12.2 |
| Example 13 | Polyvinyl alcohol resin (13) | 95 | 1 | 4 | Amino group | 1300 | 3.2 | 2.11 | 0.66 | 12.4 |

(continued)

| | | Hydroxy group content (mol%) | Residual acetyl group content (mol%) | Modified group content (mol%) | Type of modified group | Viscosity average degree of polymerization | Permittivity | | | Solubility parameter |
|---|---|---|---|---|---|---|---|---|---|---|
| | | | | | | | A (1 kHz, 25°C) | B (1 kHz, 125°C) | B/A | |
| Example 14 | Polyvinyl alcohol resin (14) | 95 | 1 | 4 | Amino group | 1300 | 3.2 | 2.18 | 0.68 | 12.4 |
| Example 15 | Polyvinyl alcohol resin (15) | 95 | 1 | 4 | Amino group | 1300 | 3.3 | 2.11 | 0.64 | 12.4 |
| Example 16 | Polyvinyl alcohol resin (16) | 95 | 1 | 4 | Amino group | 1300 | 3.2 | 2.08 | 0.65 | 12.4 |
| Example 17 | Polyvinyl alcohol resin (17) | 95 | 1 | 4 | Amino group | 1300 | 3.3 | 2.05 | 0.62 | 12.4 |

[Table 6]

| | | Hydroxy group content (mol%) | Residual acetyl group content (mol%) | Modified group content (mol%) | Type of modified group | Viscosity average degree of polymerization | Permittivity | | | Solubility parameter |
|---|---|---|---|---|---|---|---|---|---|---|
| | | | | | | | A (1 kHz, 25°C) | B (1 kHz, 125°C) | B/A | |
| Example 18 | Polyvinyl alcohol resin (18) | 95 | 1 | 4 | Amino group | 1300 | 3.3 | 2.05 | 0.62 | 12.4 |
| Example 19 | Polyvinyl alcohol resin (19) | 95 | 1 | 4 | Amino group | 1300 | 3.3 | 2.15 | 0.65 | 12.4 |
| Example 20 | Polyvinyl alcohol resin (20) | 95 | 1 | 4 | Amino group | 1300 | 3.2 | 2.02 | 0.63 | 12.4 |
| Example 21 | Polyvinyl alcohol resin (21) | 95 | 1 | 4 | Amino group | 1300 | 3.3 | 2.21 | 0.67 | 12.4 |
| Example 22 | Polyvinyl alcohol resin (22) | 95 | 1 | 4 | Amino group | 1300 | 3.4 | 2.24 | 0.66 | 12.4 |
| Example 23 | Polyvinyl alcohol resin (23) | 95 | 1 | 4 | Amino group | 1300 | 3.2 | 2.02 | 0.63 | 12.4 |
| Example 24 | Polyvinyl alcohol resin (24) | 95 | 1 | 4 | Amino group | 1300 | 3.3 | 2.21 | 0.67 | 12.4 |
| Example 25 | Polyvinyl alcohol resin (25) | 95 | 1 | 4 | Amino group | 1300 | 3.3 | 2.18 | 0.66 | 12.4 |
| Example 26 | Polyvinyl alcohol resin (26) | 95 | 1 | 4 | Amino group | 1300 | 3.2 | 2.14 | 0.67 | 12.4 |
| Example 27 | Polyvinyl alcohol resin (52) | 95 | 1 | 4 | Sulfonic acid group | 1300 | 3.2 | 2.05 | 0.64 | 12.8 |
| Example 28 | Polyvinyl alcohol resin (53) | 95 | 1 | 4 | Sulfonic acid group | 1300 | 3.4 | 2.24 | 0.66 | 12.8 |
| Example 29 | Polyvinyl alcohol resin (54) | 95 | 1 | 4 | Sulfonic acid group | 1300 | 3.1 | 1.92 | 0.62 | 12.8 |
| Example 30 | Polyvinyl alcohol resin (55) | 95 | 1 | 4 | Sulfonic acid group | 1300 | 3.4 | 2.18 | 0.64 | 12.8 |

(continued)

| | | Hydroxy group content (mol%) | Residual acetyl group content (mol%) | Modified group content (mol%) | Type of modified group | Viscosity average degree of polymerization | Permittivity | | | Solubility parameter |
|---|---|---|---|---|---|---|---|---|---|---|
| | | | | | | | A (1 kHz, 25°C) | B (1 kHz, 125°C) | B/A | |
| Example 31 | Polyvinyl alcohol resin (56) | 95 | 1 | 4 | Sulfonic acid group | 1300 | 3.3 | 1.98 | 0.6 | 12.8 |
| Example 32 | Polyvinyl alcohol resin (57) | 95 | 1 | 4 | Sulfonic acid group | 1300 | 3.1 | 1.86 | 0.6 | 12.8 |
| Example 33 | Polyvinyl alcohol resin (58) | 95 | 1 | 4 | Sulfonic acid group | 1300 | 3.3 | 2.08 | 0.63 | 12.8 |
| Example 34 | Polyvinyl alcohol resin (59) | 95 | 1 | 4 | Sulfonic acid group | 1300 | 3.4 | 2.07 | 0.61 | 12.8 |
| Example 35 | Polyvinyl alcohol resin (60) | 95 | 1 | 4 | Sulfonic acid group | 1300 | 3.3 | 2.15 | 0.65 | 12.8 |

[Table 7]

| | | Hydroxy group content (mol%) | Residual acetyl group content (mol%) | Modified group content (mol%) | Type of modified group | Viscosity average degree of polymerization | Permittivity | | | Solubility parameter |
|---|---|---|---|---|---|---|---|---|---|---|
| | | | | | | | A (1 kHz, 25°C) | B (1 kHz, 125°C) | B/A | |
| Comparative Example 1 | Polyvinyl alcohol resin (27) | 99 | 1 | - | - | 600 | 2.8 | 1.82 | 0.65 | 11.3 |
| Comparative Example 2 | Polyvinyl alcohol resin (28) | 95 | 1 | 4 | Sulfonic acid group | 1300 | 3.1 | 1.61 | 0.52 | 12.8 |
| Comparative Example 3 | Polyvinyl alcohol resin (29) | 95 | 3.8 | 1.2 | Amide group | 1700 | 2.8 | 1.51 | 0.54 | 11.4 |
| Comparative Example 4 | Polyvinyl alcohol resin (30) | 95 | 1 | 4 | Amino group | 1300 | 2.9 | 1.68 | 0.58 | 11.8 |
| Comparative Example 5 | Polyvinyl alcohol resin (31) | 95 | 1 | 4 | Amino group | 1300 | 2.8 | 1.62 | 0.58 | 11.7 |
| Comparative Example 6 | Polyvinyl alcohol resin (32) | 95 | 1 | 4 | Amino group | 1300 | 2.9 | 1.71 | 0.59 | 11.8 |
| Comparative Example 7 | Polyvinyl alcohol resin (33) | 95 | 1 | 4 | Amino group | 1300 | 2.8 | 1.51 | 0.54 | 11.8 |
| Comparative Example 8 | Polyvinyl alcohol resin (34) | 95 | 1 | 4 | Amino group | 1300 | 2.8 | 1.46 | 0.52 | 11.8 |
| Comparative Example 9 | Polyvinyl alcohol resin (35) | 95 | 1 | 4 | Amino group | 1300 | 2.9 | 1.45 | 0.5 | 11.8 |
| Comparative Example 10 | Polyvinyl alcohol resin (36) | 95 | 1 | 4 | Amino group | 1300 | 2.8 | 1.57 | 0.56 | 11.8 |
| Comparative Example 11 | Polyvinyl alcohol resin (37) | 95 | 1 | 4 | Amino group | 1300 | 2.9 | 1.51 | 0.52 | 11.8 |
| Comparative Example 12 | Polyvinyl alcohol resin (38) | 95 | 1 | 4 | Amino group | 1300 | 2.9 | 1.65 | 0.57 | 11.7 |
| Comparative Example 13 | Polyvinyl alcohol resin (39) | 95 | 1 | 4 | Amino group | 1300 | 2.7 | 1.40 | 0.52 | 11.8 |

[Table 8]

| | | Hydroxy group content (mol%) | Residual acetyl group content (mol%) | Modified group content (mol%) | Type of modified group | Viscosity average degree of polymerization | Permittivity | | | Solubility parameter |
|---|---|---|---|---|---|---|---|---|---|---|
| | | | | | | | A (1 kHz, 25°C) | B (1 kHz, 125°C) | B/A | |
| Comparative Example 14 | Polyvinyl alcohol resin (40) | 95 | 1 | 4 | Amino group | 1300 | 2.8 | 1.48 | 0.53 | 11.8 |
| Comparative Example 15 | Polyvinyl alcohol resin (41) | 95 | 1 | 4 | Amino group | 1300 | 2.6 | 1.43 | 0.55 | 11.8 |
| Comparative Example 16 | Polyvinyl alcohol resin (42) | 95 | 1 | 4 | Amino group | 1300 | 2.8 | 1.65 | 0.59 | 11.8 |
| Comparative Example 17 | Polyvinyl alcohol resin (43) | 95 | 1 | 4 | Amino group | 1300 | 2.9 | 1.74 | 0.6 | 11.8 |
| Comparative Example 18 | Polyvinyl alcohol resin (44) | 95 | 1 | 4 | Amino group | 1300 | 2.8 | 1.48 | 0.53 | 11.8 |
| Comparative Example 19 | Polyvinyl alcohol resin (45) | 95 | 1 | 4 | Amino group | 1300 | 2.8 | 1.88 | 0.67 | 11.8 |
| Comparative Example 20 | Polyvinyl alcohol resin (46) | 95 | 1 | 4 | Amino group | 1300 | 2.8 | 1.51 | 0.54 | 11.7 |
| Comparative Example 21 | Polyvinyl alcohol resin (47) | 95 | 1 | 4 | Amino group | 1300 | 2.9 | 1.60 | 0.55 | 11.8 |
| Comparative Example 22 | Polyvinyl alcohol resin (48) | 95 | 1 | 4 | Amino group | 1300 | 2.8 | 1.43 | 0.51 | 11.8 |
| Comparative Example 23 | Polyvinyl alcohol resin (49) | 95 | 1 | 4 | Amino group | 1300 | 2.9 | 1.60 | 0.55 | 11.8 |
| Comparative Example 24 | Polyvinyl alcohol resin (61) | 95 | 1 | 4 | Amino group | 1300 | 2.8 | 1.57 | 0.56 | 11.8 |
| Comparative Example 25 | Polyvinyl alcohol resin (62) | 95 | 1 | 4 | Amino group | 1300 | 2.9 | 1.65 | 0.57 | 11.8 |
| Comparative Example 26 | Polyvinyl alcohol resin (63) | 95 | 1 | 4 | Amino group | 1300 | 2.8 | 1.65 | 0.59 | 11.8 |

[Table 9]

| | Capacitance (pF) | Capacitance retention | Breaking strength (MPa) | Elongation at break (%) | Breakdown voltage (kV/mm) | Cracking level in winding |
|---|---|---|---|---|---|---|
| Example 1 | 19 | 0.82 | 85 | 25 | 305 | 1 |
| Example 2 | 18.6 | 0.78 | 80 | 30 | 310 | 1 |
| Example 3 | 17.7 | 0.82 | 80 | 24 | 303 | 1 |
| Example 4 | 17.3 | 0.84 | 78 | 24 | 310 | 1 |
| Example 5 | 16.8 | 0.83 | 82 | 28 | 310 | 1 |
| Example 6 | 16.5 | 0.80 | 74 | 25 | 320 | 1 |
| Example 7 | 15.4 | 0.62 | 82 | 23 | 302 | 2 |
| Example 8 | 15.1 | 0.64 | 80 | 22 | 305 | 2 |
| Example 9 | 14.5 | 0.63 | 81 | 23 | 303 | 1 |
| Example 10 | 14.6 | 0.62 | 82 | 24 | 303 | 2 |
| Example 11 | 14.6 | 0.61 | 84 | 23 | 305 | 2 |
| Example 12 | 15.3 | 0.64 | 83 | 24 | 307 | 1 |
| Example 13 | 14.2 | 0.65 | 83 | 23 | 305 | 1 |
| Example 14 | 15.5 | 0.67 | 82 | 22 | 301 | 1 |
| Example 15 | 14.3 | 0.63 | 85 | 23 | 306 | 2 |
| Example 16 | 13.5 | 0.64 | 82 | 24 | 305 | 2 |
| Example 17 | 13.6 | 0.61 | 81 | 24 | 305 | 1 |
| Example 18 | 13.8 | 0.61 | 83 | 25 | 304 | 2 |
| Example 19 | 14.6 | 0.64 | 81 | 25 | 302 | 2 |
| Example 20 | 15.5 | 0.62 | 80 | 24 | 304 | 1 |
| Example 21 | 14.8 | 0.66 | 82 | 26 | 306 | 2 |
| Example 22 | 15.3 | 0.65 | 83 | 24 | 304 | 2 |
| Example 23 | 15.2 | 0.62 | 84 | 25 | 306 | 1 |
| Example 24 | 14.9 | 0.66 | 85 | 25 | 304 | 2 |
| Example 25 | 14.8 | 0.65 | 82 | 26 | 305 | 2 |
| Example 26 | 14.8 | 0.66 | 83 | 27 | 304 | 3 |
| Example 27 | 14.1 | 0.64 | 82 | 24 | 304 | 2 |
| Example 28 | 15.4 | 0.66 | 80 | 25 | 306 | 2 |
| Example 29 | 14.1 | 0.62 | 81 | 25 | 301 | 1 |
| Example 30 | 13.4 | 0.64 | 82 | 24 | 300 | 2 |
| Example 31 | 13.5 | 0.60 | 84 | 26 | 305 | 1 |
| Example 32 | 13.7 | 0.60 | 82 | 24 | 304 | 2 |
| Example 33 | 14.5 | 0.63 | 83 | 25 | 304 | 2 |
| Example 34 | 14.5 | 0.61 | 82 | 25 | 303 | 3 |
| Example 35 | 14.1 | 0.65 | 80 | 26 | 303 | 2 |

[Table 10]

| | Capacitance (pF) | Capacitance retention | Breaking strength (MPa) | Elongation at break (%) | Breakdown voltage (kV/mm) | Cracking level in winding |
|---|---|---|---|---|---|---|
| Comparative Example 1 | 11.2 | 0.61 | 71 | 18 | 280 | 4 |
| Comparative Example 2 | 11.5 | 0.64 | 68 | 17 | 280 | 4 |
| Comparative Example 3 | 11.7 | 0.62 | 70 | 16 | 270 | 4 |
| Comparative Example 4 | 11.1 | 0.57 | 70 | 16 | 268 | 3 |
| Comparative Example 5 | 11.7 | 0.57 | 69 | 15 | 269 | 4 |
| Comparative Example 6 | 10.5 | 0.58 | 68 | 16 | 266 | 3 |
| Comparative Example 7 | 11.1 | 0.53 | 68 | 17 | 266 | 2 |
| Comparative Example 8 | 10.5 | 0.51 | 69 | 14 | 268 | 3 |
| Comparative Example 9 | 11.6 | 0.49 | 66 | 16 | 269 | 3 |
| Comparative Example 10 | 12.5 | 0.55 | 67 | 16 | 269 | 3 |
| Comparative Example 11 | 11.4 | 0.51 | 69 | 15 | 267 | 4 |
| Comparative Example 12 | 12.1 | 0.56 | 68 | 16 | 268 | 3 |
| Comparative Example 13 | 12.6 | 0.51 | 66 | 17 | 261 | 4 |
| Comparative Example 14 | 11 | 0.52 | 64 | 16 | 262 | 3 |
| Comparative Example 15 | 12.5 | 0.54 | 68 | 15 | 263 | 3 |
| Comparative Example 16 | 11.1 | 0.58 | 66 | 15 | 271 | 3 |
| Comparative Example 17 | 10.9 | 0.59 | 68 | 14 | 268 | 3 |
| Comparative Example 18 | 11.6 | 0.52 | 67 | 16 | 269 | 3 |
| Comparative Example 19 | 11.3 | 0.66 | 69 | 15 | 266 | 4 |
| Comparative Example 20 | 11.2 | 0.53 | 68 | 16 | 269 | 3 |
| Comparative Example 21 | 11.7 | 0.54 | 67 | 14 | 267 | 4 |
| Comparative Example 22 | 11.8 | 0.50 | 69 | 14 | 268 | 4 |
| Comparative Example 23 | 11.2 | 0.54 | 68 | 13 | 264 | 4 |
| Comparative Example 24 | 11.5 | 0.56 | 68 | 17 | 272 | 4 |
| Comparative Example 25 | 11.8 | 0.57 | 68 | 13 | 275 | 4 |
| Comparative Example 26 | 11.2 | 0.59 | 66 | 17 | 271 | 4 |

INDUSTRIAL APPLICABILITY

The present invention can provide a polyvinyl alcohol resin that can provide a film having high capacitance retention at high temperature and having excellent strength and flexibility.

## Claims

**1.** A polyvinyl alcohol resin satisfying the following formulas (1) and (2):

$$A \geq 3.0 \quad (1)$$

$$1.0 \geq B/A \geq 0.6 \quad (2)$$

where A is a permittivity at 25°C measured at 1 kHz, and B is a permittivity at 125°C measured at 1 kHz.

**2.** The polyvinyl alcohol resin according to claim 1,
wherein the polyvinyl alcohol resin has a solubility parameter of 12 or greater.

**3.** The polyvinyl alcohol resin according to claim 1 or 2,
wherein the polyvinyl alcohol resin has, in a side chain, at least one functional group selected from the group consisting of a carboxylic acid group, a sulfonic acid group, a pyrrolidone ring group, an amide group, and an amino group.

**4.** A film roll comprising the polyvinyl alcohol resin according to any one of claims 1 to 3.

**5.** A polyvinyl acetal resin that is an acetalized product of the polyvinyl alcohol resin according to any one of claims 1 to 3.

**INTERNATIONAL SEARCH REPORT**

International application No. **PCT/JP2024/011966**

**A. CLASSIFICATION OF SUBJECT MATTER**

***C08F 16/06***(2006.01)i; ***C08F 8/12***(2006.01)i; ***C08F 16/38***(2006.01)i; ***C08J 5/18***(2006.01)i
FI: C08F16/06; C08F16/38; C08F8/12; C08J5/18 CEX

According to International Patent Classification (IPC) or to both national classification and IPC

**B. FIELDS SEARCHED**

Minimum documentation searched (classification system followed by classification symbols)

C08F2/00-2/60; C08F6/00-246/00; C08K3/00-13/08; C08L1/00-101/14; C08J5/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-520584 A (CELANESE INTERNATIONAL CORP.) 26 July 2007 (2007-07-26) claims 1-38, examples | 1-5 |
| A | WO 2015/098978 A1 (KURARAY CO., LTD.) 02 July 2015 (2015-07-02) claims 1-7, examples | 1-5 |
| A | JP 2001-261711 A (UNITIKA CHEM CO., LTD.) 26 September 2001 (2001-09-26) claim 1, examples | 1-5 |
| A | JP 2008-146835 A (SEKISUI CHEMICAL CO., LTD.) 26 June 2008 (2008-06-26) claims 1-4, examples | 1-5 |
| A | JP 2003-154745 A (THE NIPPON SYNTHETIC CHEMICAL INDUSTRY CO., LTD.) 27 May 2003 (2003-05-27) claims 1-7, examples | 1-5 |
| A | JP 2018-067661 A (JAPAN VAM & POVAL CO., LTD.) 26 April 2018 (2018-04-26) claims 1-7, examples | 1-5 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 May 2024** | **04 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/011966**

**C. DOCUMENTS CONSIDERED TO BE RELEVANT**

| Category* | Citation of document, with indication, where appropriate, of the relevant passages | Relevant to claim No. |
|---|---|---|
| A | WO 2012/081403 A1 (FUJIFILM CORPORATION) 21 June 2012 (2012-06-21) claims 1-17, examples | 1-5 |
| A | WO 2020/203835 A1 (SEKISUI CHEMICAL CO., LTD.) 08 October 2020 (2020-10-08) claims 1-11, examples | 1-5 |

Form PCT/ISA/210 (second sheet) (July 2022)

**INTERNATIONAL SEARCH REPORT**
**Information on patent family members**

International application No.
**PCT/JP2024/011966**

| Patent document cited in search report | Publication date (day/month/year) | Patent family member(s) | Publication date (day/month/year) |
|---|---|---|---|
| JP 2007-520584 A | 26 July 2007 | US 2005/0065272 A1<br>claims 1-20, examples<br>US 2010/0305270 A1<br>US 2011/0288229 A1<br>WO 2005/010057 A1<br>KR 10-2006-0056938 A<br>CN 1856509 A<br>TW 200505951 A | |
| WO 2015/098978 A1 | 02 July 2015 | US 2016/0340456 A1<br>claims 1-7, examples<br>EP 3088428 A1<br>CN 106029715 A<br>TW 201533128 A | |
| JP 2001-261711 A | 26 September 2001 | (Family: none) | |
| JP 2008-146835 A | 26 June 2008 | (Family: none) | |
| JP 2003-154745 A | 27 May 2003 | (Family: none) | |
| JP 2018-067661 A | 26 April 2018 | (Family: none) | |
| WO 2012/081403 A1 | 21 June 2012 | US 2013/0256581 A1<br>claims 1-20, examples<br>EP 2654094 A1<br>CN 103262275 A<br>KR 10-2014-0009253 A | |
| WO 2020/203835 A1 | 08 October 2020 | US 2022/0153983 A1<br>claims 1-11, examples<br>EP 3950731 A1<br>KR 10-2021-0148099 A<br>KR 10-2022-0152586 A<br>CN 113728017 A<br>CN 116162189 A<br>TW 202043363 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019065059 A
- WO 2015098978 A